# EUROPEAN PATENT SPECIFICATION

(11) **EP 1 999 930 B1**
(45) Date of publication and mention of the grant of the patent: **22.02.2017**
(21) Application number: 07747962.4
(22) Date of filing: 23.03.2007
(51) Int. Cl.: H04L 9/08, H04L 29/06, H04W 12/04

(54) **A METHOD AND APPARATUS FOR HANDLING KEYS USED FOR ENCRYPTION AND INTEGRITY**
VERFAHREN UND VORRICHTUNG ZUR VERWALTUNG VON SCHLÜSSELN FÜR VERSCHLÜSSELUNG UND INTERGRITÄT
PROCÉDÉ ET APPAREIL POUR LA MANIPULATION DE CLÉS UTILISÉES POUR LE CRYPTAGE ET L'INTÉGRITÉ

(30) Priority: 28.03.2006 SE 0600695; 28.03.2006 US 786478 P
(43) Date of publication of application: 10.12.2008
(73) Proprietor: Telefonaktiebolaget LM Ericsson (publ), 164 83 Stockholm (SE)
(72) Inventor: BLOM, Rolf, S-175 68 Järfälla (SE); NORRMAN, Karl, S-116 28 Stockholm (SE); NÄSLUND, Mats, SE- 168 36 Bromma (SE)
(74) Representative: Ericsson
(86) International application number: PCT/SE2007/000287
(87) International publication number: WO 2007/111557

(56) References cited:
- WO-A1-03/107584
- WO-A1-2005/032201
- WO-A2-03/049357
- US-A1- 2005 031 126
- US-A1- 2006 205 388

## Description

### TECHNICAL FIELD

The present invention relates generally to a method and apparatus for providing keys for protecting communication between a terminal and service points in a communication network.

### BACKGROUND

In wireless communication, security is an important issue since conveying information over the air makes it possible to illicitly intercept and/or modify the communicated information. Therefore, the information is typically encrypted and/or integrity protected before being sent over the air. The prevailing communication standards of today for radio communication involves various security methods and routines. For example, mobile (or cellular) access networks according to GSM (Global System for Mobile communications), GPRS (General Packet Radio Service) and UMTS (Universal Mobile Telecommunications System) utilise two keys referred to as Ck and Ik, to ensure integrity and for encrypting information communicated over radio channels between a particular mobile terminal and the mobile network.

In UMTS, each mobile terminal shares a unique pair of keys Ck and Ik with the network which can be used for encrypting payload data as well as various signalling messages, and also for verifying the identity of the terminal, referred to as integrity. The keys Ck and Ik to be used in a session are established during a registration stage when the terminal attaches to the network, which will be referred to as key agreement in this description. It should be noted that a mobile terminal can be in two different modes referred to as the idle mode when it has been registered as present in the network but is not involved in a session of transmitting/receiving data, and the active mode when it transmits/receives data in a session.

The information communicated over the air between a mobile terminal and a base station is conventionally divided into three main categories: 1) payload data, also referred to as "user plane" data, 2) NAS (Non-Access Stratum) signalling which is information related to, e.g., security including authentication and encryption, and 3) RRC (Radio Resource Control) which is information related to radio communication including channel specifics, modulation and multiplexing schemes, power regulation, signal measurements, etc.

In so-called 3G-systems according to UMTS, the user plane data is typically conveyed over four different nodes in the access network: the base station (also referred to as NodeB), the RNC (Radio Network Controller) the SGSN (Serving GPRS Support Node) and the GGSN (Gateway GPRS Support Node), of which the base stations and RNC constitute a radio network part and the SGSN and GGSN constitute a core network part. In 3G systems, all encryption/decryption of user plane data, NAS and RRC is executed by the RNC and the terminal, whereas in traditional GSM systems, the encryption is handled by the base stations.

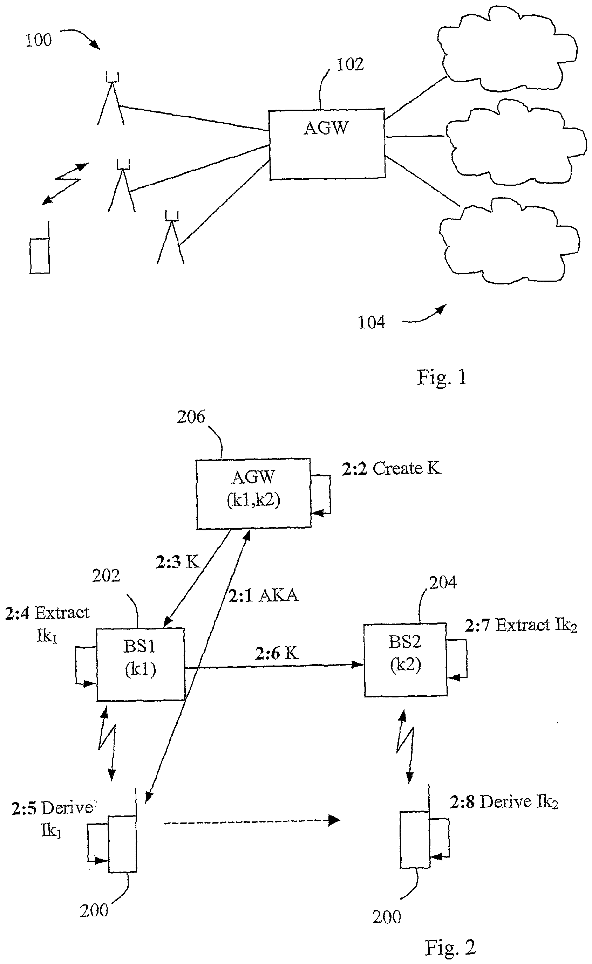

Currently, a new network architecture is being developed to provide so-called "evolved 3G access", as illustrated in Fig. 1, based on 3GPP (Third Generation Partnership Project). The new architecture basically comprises two node types including "evolved" base stations 100 in the radio network part connected to a central access control gateway AGW 102 in the core network part by means of the well-known S1 interface. An access network may contain plural AGW nodes serving different geographic areas. The AGW node is connected to various different external networks 104 using well-known interfaces, including the Internet (using the Gi interface), other 3GPP networks (using the Gn interface) and non-3GPP networks (using the S2 interface), and includes certain functions similar to those currently implemented in the RNC, SGSN and GGSN.

In particular, security processing related to encryption and integrity will take place in the base station 100 and the AGW node 102. Basically, the encryption of user plane data, and potentially also the NAS signalling, will be handled by the AGW node 102, whereas the protection of the RRC signalling will be handled by the base stations 100. The initial process of authenticating the subscriber and key agreement will take place between a SIM (Subscriber Identity Module) in the terminal and the AGW node, and is often referred to as AKA (Authentication and Key Agreement). Thus, the above-mentioned keys Ck and Ik may be established by the terminal and the AGW node during the AKA process.

In order to provide interoperability between different network architectures, it is highly desirable that security components and routines of existing 3G systems can be reused in the above-described two-node architecture as well, including maintaining the AKA process. Consequently, there is a need to provide security keys for both the base station and the AGW node, preferably based on the above keys Ck and Ik. In the base station a key is needed to protect the RRC signalling, and in the AGW node a key is needed to protect the NAS signalling as well as the user plane data.

Although it would be possible to send a copy of, e.g., Ik to the base station and use the same key in both the base station and the AGW node, this may result in certain drawbacks. Firstly, a local base station is somewhat vulnerable to illicit attacks by being typically situated at easily accessed and unguarded places, as compared to the more centralized AGW node which can be installed wholly protected. Therefore, there is a risk that the Ik key is intercepted at the base station such that the NAS signalling can be illicitly detected. It should be noted in this context that the sensitive NAS information generally demands a higher degree of security than the RRC information. However, the RRC signalling may include a terminal identifier which makes it desirable to protect anyway.

Secondly, it may be difficult to obtain satisfactorily protection for the case when intercepted information is recorded and replayed later (so-called replay attacks), if the same key is used for two different purposes which provides plural opportunities to detect the used key. Therefore, if Ik is reused in the base station, it is required that the AGW node at least applies some one-way function f to Ik before sending it in a thus modified form f(Ik) = Ik' to the base station.

However, if Ik' is intercepted at a base station during a session, this security flaw will persist even if the session is handed over to a new base station, i.e. as long as Ik' is used. This problem can be avoided if the AKA process is repeated at regular intervals (e.g. triggered by hand-over), which however may disturb the session, thus significantly impacting a desirable seamless behaviour of services.

It is therefore desirable to avoid persistent insecurity following a key interception as the terminal moves between different service points, i.e. base stations, yet without requiring extra operations such as the establishment of new keys in a re-authentication according to the AKA process. An attempt to meet these objects has been made involving a new type of key that is shared between the base station and the AGW node, according to a proposed procedure described below with reference to Fig. 2.

Fig. 2 illustrates a mobile terminal 200 and a mobile access network including a plurality of base stations of which two are shown, BS1 202 and BS2 204, which are connected to a central AGW node 206, in accordance with the two-node architecture shown in Fig. 1. In this proposal, each base station in the network covered by the AGW node 206 share a predefined key with the AGW node. As indicated in the figure, base stations 202 and 204 thus share predefined keys k1 and k2, respectively, with AGW node 206.

First, terminal 200 attaches to the network by radio connection with BS1 202, thereby being the serving base station, and the conventional keys Ck and Ik are established by means of the AKA process, in a first **step 2:1.**

In order to establish further protection, the AGW node 206 will then look up the key k1 of BS1. Furthermore, the AGW node will also look up the corresponding key of a suitable number of "neighbouring" base stations, i.e. base stations located in the neighbourhood of the serving base station BS1 to which the terminal might be handed over to when moving during a session, including BS2 204. The neighbouring base stations should be selected as covering a reasonable area in which the terminal is expected to be. Around 5-10 base stations may be considered as neighbouring base stations, e.g. depending on their cell sizes.

Next, the AGW node 206 uses the Ik key established for the terminal 200, to create a modified key specifically for each base station, by applying a predetermined function f with the Ik key and a base station identity "BS" as input, as follows: Ik₁ = f (Ik, "BS1") is created for BS1, Ik₂ = f(Ik, "BS2") is created for BS2, and in general, Ikⱼ = f(Ik, "BSj") is created for base station j. It should be noted that the predetermined function f is also known to the terminal, which will be utilised as described below.

Each produced modified Ik key Ik₁, Ik₂ ... Ikⱼ is then "wrapped" (i.e. encrypted) by the key k shared with the corresponding base station, altogether making up a set of individually wrapped keys for all base stations (the serving one and the neighbouring ones): Encr(k1, Ik₁), Encr(k2, Ik₂) ... Encr(kj, Ikⱼ). In the following, "K" will be used for short to represent the complete set of all these wrapped keys. The whole process of creating K as described above is illustrated by a **step 2:2** in the figure.

According to the proposed procedure, the AGW node 206 now transfers the entire key-set K to the serving base station BS1 202, in a following **step 2:3.** BS1 can then decrypt the component of K corresponding to Encr(k1, Ik₁) using its unique key k1, to extract the above-mentioned modified Ik key Ik₁ originally created for that base station, in a next **step 2:4,** to be shared with the terminal. BS1 also stores the entire key-set K for future use.

Since the terminal naturally knows its original Ik key and the identity of the serving base station "BS1", it can derive the same modified Ik key Ik₁ by applying the function f: Ik₁ = f(Ik, "BS1"), in connection with starting a communication session, as shown in **step 2:5.** Hence, a modified key Ik₁ has now been established that is unique for this particular combination of terminal and base station, based on the terminal-unique key Ik and base station-unique identity "BS1". The key Ik₁ can now be used by terminal 200 and base station 202 to protect the RRC signalling during the session, as long as terminal 200 stays connected to base station 202.

If the terminal at some point during the session moves to be handed over to a new base station, in this case BS2 204 as illustrated by the dashed arrow, the old BS1 202 transfers the entire key-set K to BS2 204, in a **step 2:6.** Using the received key-set K, BS2 204 can similarly extract its own modified Ik key Ik₂ in a **step 2:7.** The terminal will also derive Ik₂ using the function f (Ik, "BS2"), in a **step 2:8**, to be used as a key for encryption and/or integrity in further communication.

The above-described proposed procedure of establishing a modified Ik key can also be used to establish a modified Ck key that is unique for each particular combination of terminal and base station, in order to provide more reliable protection of user plane communication and the sensitive NAS signalling.

Thus, the above-described prior art solution provides keys unique to each base station-terminal combination. Even if at some point a key Ikₓ used in one cell x (i.e. base station) is illicitly intercepted, a new key Ik_{y} will be used instead as soon as a hand-over occurs to another cell y, and the security flaw does not persist. Hence, the solution in Fig. 2 provides backwards as well as forwards security whenever the serving base station is changed.

However, there are some significant problems associated with the above solution. It is generally quite complex since new Ik keys must be calculated and wrapped for a significant number of base stations of which only a few will be used, if any at all. Further, the AGW node needs to "predict" which base stations that might possibly be involved in future hand-overs, which is more or less haphazard as the terminal may move in unexpected directions. If the terminal swiftly moves out of the area covered by the collection of selected neighbouring base stations included in key-set K, the process must start all over again to obtain a key-set K for a new area. Moreover, serving base stations are required to store the entire key-set K, and not only its "own" key, and to transfer it to the next base station upon hand-over.

It is generally desirable to obtain a simple yet reliable way of using keys for encryption and/or integrity protection, particularly when a communication terminal switches communication from one service point to another service point. More specifically, it would be beneficial to avoid the need for hand-over predictions and to reduce the number of keys that must be handled by base stations or other service points. It is also desirable to provide backward security when switching service points, and forward security when a terminal starts a session, e.g. goes from idle mode to active mode, with a minimum of service impact.

Although the background description above has been focused on mobile terminals using base stations in a 3G network as service points, the discussed issues may be relevant for other mobile (or cellular) access networks as well, and also for fixed access networks using wired connections such as DSL (Digital Subscriber Line), PON (Passive Optical Network) and DOCSIS (Data Over Cable Service Interface Specification). For example, the above-mentioned AKA process may thus be replaced by other similar processes for establishing one or more keys to be used in session communications, depending on the prevailing network routines. Further, viewing "access" or "connectivity" as a general service, the present invention can also be applied to other communication services, e.g. data streaming, etc.

### SUMMARY

It is an object of the present invention to generally address the problems and demands outlined above, and to provide a convenient mechanism for obtaining keys for protecting communication between a terminal and service points in a communication network.

This object and others can be obtained by methods and arrangements, respectively, according to the attached independent claims.

In the present invention, a method and an arrangement are defined for providing keys for protecting communication between a terminal and service points in a communication network, as implemented in a service control node. A basic key is first established for the terminal during a registration procedure when the terminal has entered the network. An initial modified key is then created by applying a predetermined function to at least the basic key and an initial value of a key version parameter, when the terminal starts a first communication session. The initial modified key is sent to a first service point to which the terminal is initially attached, such that it can be used to protect communication between the terminal and the first service point.

At a later stage, a key request may be received from a new service point to which the terminal is attached, e.g. when the terminal enters an active state after a period in idle state. In response thereto, a new initial modified key is created by applying said function to at least the basic key and an updated value of said key version parameter, when the terminal starts a second communication session. The new initial modified key is finally sent to the new service point, such that it can be used to protect communication between the terminal and the new service point.

A service point identity may also be input to the predetermined function when creating the initial modified key and/or new initial modified key, to make the key unique for the particular terminal/service point combination.

The value of the key version parameter is initialized to a certain value and then changed according to a predetermined scheme or algorithm each time a new initial modified key is created. For example, the key version parameter may be initialised to zero and then incremented by one each time a new initial modified key is created.

The key request may be received when the terminal is reactivated after being idle, or after the terminal has been active a preset time period, or has communicated a predetermined amount of data, or has made a predetermined number of service point switches.

A method and an arrangement are also defined for obtaining keys for protecting communication with a terminal initially attached to a service point in a communication network, as executed in said service point. In the service point, an initial modified key is first received from a service control node, that has been created by applying a predetermined first function to at least a basic key established for the terminal and an initial value of a key version parameter. When it is detected that the terminal will switch to a second service point during an ongoing session, a second modified key is created by applying a predetermined second function to at least the initial modified key. The second modified key is finally sent to the second service point, such that it can be used to protect communication between the terminal and the second service point.

The service point may send a key request to the service control node to obtain a new initial modified key. The key request may be sent when the terminal is reactivated after being idle, or after the terminal has been active a preset time period, or has communicated a predetermined amount of data, or has made a predetermined number of service point switches.

A method and an arrangement are further defined for obtaining keys for protecting communication with service points in a communication network, as executed in a terminal initially attached to a first service point in the network. A basic key Ik is first determined during a registration procedure when entering the network. An initial modified key is then created by applying a predetermined first function to at least the basic key and an initial value of a key version parameter, when starting a first communication session, such that it can be used to protect communication with the first service point. If the terminal then switches to a second service point, a second modified key is created by applying a predetermined second function to at least the initial modified key.

If the terminal attaches to a new service point after an idle period in order to start a second communication session, a new initial modified key is created by again applying the first function to at least the basic key and an updated value of said key version parameter, such that it can be used to protect communication with the new service point.

A service point identity may also be input to the predetermined function when creating the initial modified key and/or new initial modified key, to make the key unique for the particular terminal/service point combination.

The value of the key version parameter is first initialized to a certain value and then changed according to a predetermined scheme or algorithm each time a new initial modified key is created. For example, the key version parameter may be initialised to zero and then incremented by one each time a new initial modified key is created.

### BRIEF DESCRIPTION OF THE DRAWINGS

The present invention will now be described in more detail and with reference to the accompanying drawings, in which:
- Fig. 1 is a schematic view illustrating a mobile network architecture according to a previously known proposed evolved 3G access for mobile communication, in which the present invention can be used.
- Fig. 2 is a schematic block diagram illustrating a proposed procedure of handling keys in the network architecture shown in Fig. 1, according to the prior art.
- Fig. 3A is a signalling diagram illustrating a procedure of handling keys, according to one embodiment.
- Fig. 3B is a signalling diagram illustrating a procedure of handling keys, continued from Fig. 3A.
- Fig. 3C is a signalling diagram illustrating a procedure of handling keys, continued from Fig. 3B.
- Fig. 4 is a flow chart illustrating a basic procedure of providing keys, as executed in a service control node, in accordance with another embodiment.
- Fig. 5 is a flow chart illustrating a basic procedure of obtaining keys, as executed in a service point, in accordance with yet another embodiment.
- Fig. 6 is a flow chart illustrating a basic procedure of obtaining keys, as executed in a terminal, in accordance with yet another embodiment.

### DESCRIPTION OF PREFERRED EMBODIMENTS

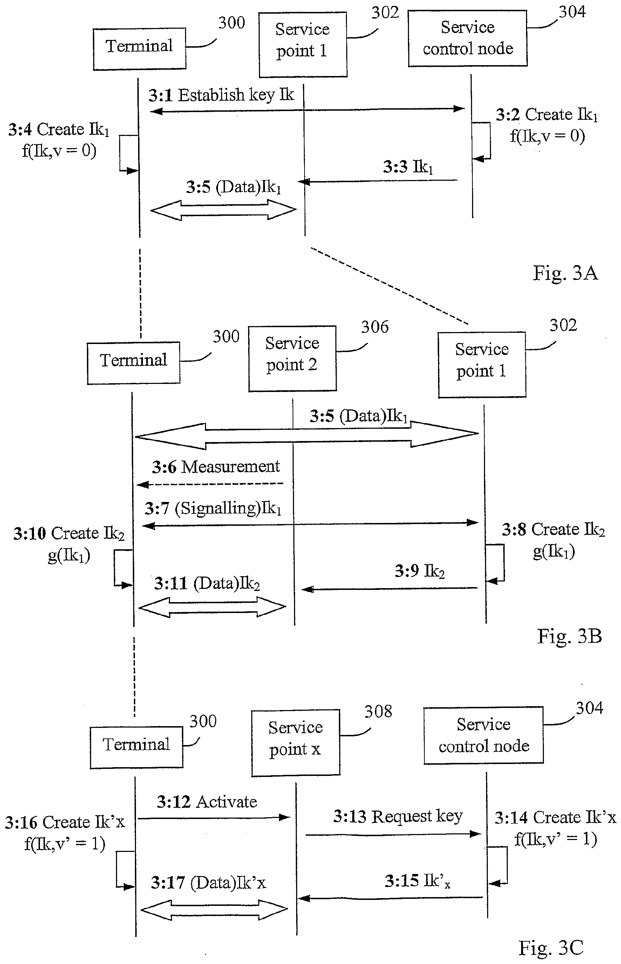

An embodiment of the present invention will now be described initially with reference to Fig. 3A which is a signalling diagram illustrating a first phase in a procedure of handling keys for encryption and/or integrity in a communication access network, e.g. the mobile access network shown in Fig. 1.

Fig. 3A illustrates a communication terminal 300, a first service point 302 and a service control node 304 to which the first service point 302 is connected, as well as a plurality of other service points (not shown). In practice, the terminal 300 may be a mobile terminal, the first service point 302 may be a base station, and the service control node 304 may be an AGW, as previously described. In this description, the term "service control node" may generally represent any central network node, e.g. in a core network, controlling a telecommunication service that is executed when the terminal is connected to a service point.

A first **step 3:1** illustrates that at least one basic key for encryption and/or integrity is established between terminal 300 and service control node 304, e.g. according to a conventional routine such as the AKA procedure when a mobile terminal is initially attached to a base station, i.e. service point 302. This basic key is here denoted Ik in analogy with the proposed procedure of Fig. 2, even though other keys such as Ck may also be used in the present solution. Moreover, the present solution can be applied for any number of keys that may be employed for different purposes, such as encryption, integrity, authentication, etc., but only one key Ik will be described in this embodiment for simplicity.

As illustrated by a next **step 3:2**, service control node 304 creates an initial modified key Ik₁ by applying a first predetermined function f to at least the original key Ik and optionally also a service point identity "SP1" to make the key Ik₁ unique for this terminal/service point combination, as similar to the creation of modified keys in the proposal of Fig. 2. Other parameters may also be used here as input to function f, such as further basic keys (e.g. Ck) and a terminal identity, which is however outside the scope of the present invention.

In the present solution, a key version parameter v is introduced as additional input to the function f to indicate the current version of the initial modified key Ik₁, such that Ik₁ = f(Ik, v). As mentioned above, "SP1" and/or other parameters may also be used as input to function f. The value of the key version parameter v will be changed according to a predetermined scheme each time a modified key Ik₁ is created as described below, here indicated as v, v', v", v"', etc. For example, the key version parameter v may be initialised to v=0 (zero) and then simply incremented by one such that v'=1, v"=2, v"'=3, etc, which is used in the present embodiment. However, the value of the key version parameter v may be changed according to any conceivable scheme or algorithm, and the present solution is not limited in this respect. It should be noted that the current value of parameter v and the function f should be known to both the terminal 300 and the service control node 304.

Returning to Fig. 3A, service control node 304 sends the initial modified key Ik₁ to service point 302 in a next **step 3:3**, for use in any forthcoming communication with terminal 300. At the same time, terminal 300 can derive the same initial modified key Ik₁ by applying the function f(Ik, v) in connection with starting a communication session, as illustrated by a **step 3:4**. It should be noted that terminal 300 may execute step 3:4 any time after step 3:1, i.e. independent of steps 3:2 and 3:3. The key Ik₁ can now be used by terminal 300 and service point 302 to protect any communication during the session, as long as terminal 300 stays connected to service point 302, which is illustrated by a **step 3:5.** In this step, "(Data)Ik₁" generally indicates that communicated data is protected by Ik₁.

Broadly speaking, any type of communication can be protected in any manner by means of the obtained key Ik₁ depending on the implementation, and the present invention is generally not limited in this respect either. In the case of mobile communication as described in the background section, particularly the RRC signalling is suitable to protect by means of key Ik₁.

Furthermore, the key version parameter v is now changed from the initial value v to the next value v' according to the predetermined scheme, after the initial modified key Ik₁ has been established and used. Thus, v may change from 0(zero) to 1 if a simple incrementing scheme is used. The updated parameter v' is then saved in both terminal 300 and service control node 304 for later use in further modified keys, to be explained below. Thereby, the terminal and the service control node are synchronized with respect to parameter v.

The next Fig. 3B is a signalling diagram illustrating a second phase in a continued procedure of handling keys for encryption and/or integrity, following the first phase of Fig. 3A. In Fig. 3B, the terminal 300 switches connection from the first service point 302 to a second service point 306, when active. In the mobile network case, this means that a mobile terminal makes a hand-over from one base station to another. Thus, the terminal is active during the service point switch, i.e. engaged in a communication session where key Ik₁ can be used, according to step 3:5 in Fig. 3A as duplicated in Fig. 3B.

For whatever reason, it is thus determined during the ongoing session of step 3:5 that the terminal 300 will switch connection to service point 306. In the mobile network case, mobile terminals conventionally perform radio measurements on signals from neighbouring base stations, in this figure indicated as an optional **step 3:6** where terminal 300 measures signals from service point (or base station) 306. The measurements may then indicate that the new base station will provide a better radio connection than the old one, thereby triggering a hand-over. In other cases, it may be determined to switch service point if the service conditions somehow change, e.g. when new services are activated, or if more bandwidth is needed, or if the currently used service point has become overloaded or the like, etc. It may even be the case that handover is made to a different radio access technology, e.g. from one network using 3G cellular to another one using WiMAX or WLAN. As long as the radio networks can be supervised from the same core network/service control node, the present solution is applicable. In that case, an identifier for the access technology may also preferably be included as input to function f such that, e.g., the new Ikⱼ = f(Ik, v, "SPj", "WLAN").

Before the service point switch can be executed, a certain amount of signalling between terminal 300 and the old service point 302 is typically required in preparation for the switch, as illustrated by a next **step 3:7.** This signalling can be protected by key Ik₁ as well, as indicated in step 3:7. In the mobile network case, hand-over signalling is generally a part of the RRC signalling conventionally protected by the basic key Ik according to current standards.

Further, the old service point 302 creates a second modified key Ik₂ at this point, as indicated by a **step 3:8**, by applying a second predetermined function g to at least the previous initial modified key Ik₁ such that Ik₂ = g(Ik₁). Again, further parameters may be used as input to function g, which however is outside the scope of the present invention. Thus, key Ik₁ is further modified into key Ik₂ by means of the function g.

The first service point 302 then sends the created key Ik₂ to the second service point 306 in a next **step 3:9.** Preferably, this transmission is protected in some way, which however is outside the scope of the present invention. According to the present solution, the function g is also known to terminal 300 which likewise creates the new modified key Ik₂ as indicated by a further **step 3:10.** It should be noted that step 3:10 may be executed independently of steps 3:8 and 3:9.

Finally, key Ik₂ can now be used by terminal 300 and service point 306 to protect the communication during the session, as long as terminal 300 stays connected to service point 306, which is illustrated by a **step 3:11.**

If the terminal 300 makes further service point switches, the procedure illustrated in Fig. 3B can be repeated such that a chain of modified keys will be used, each key being calculated from the previous one using the second function g: Ik₃ = g(Ik₂), Ik₄ = g(Ik₃), Ik₅ = g(Ik₄), and so forth. The entire chain of keys is originally based on one value of the key version parameter v, in this example the initial value v=0.

In this way, by appropriate choice of the function g, any communication can be protected using different keys at different service points (e.g. base stations) where a later key cannot reveal an earlier one. It should also be noted that if the terminal should return to a service point where it has been earlier in the same session, the new key will be different from the one used earlier with that service point since it is always calculated from the immediate previous key in the chain.

The service control node 304 is only involved in the establishment of the initial modified key Ik₁ when the terminal enters an active mode by starting a session, whereas the following keys for that session are handled solely by the terminal and each new service point. This is a much simpler operation as compared to handling plural modified keys for neighbouring base stations according to the proposal of Fig. 2. Moreover, each new key is created independently at both the terminal and the current service point which safely transfers the new key to the next service point, assuming that safe communication links are used between the service points. Hence, no sensitive key-related information is conveyed over the air.

The following Fig. 3C illustrates a third phase in the continued procedure of handling keys for encryption and/or integrity, following the second phase of Fig. 3B. This time, it is assumed that terminal 300 has actually completed the session after step 3:11 above and has entered an idle mode (e.g. to save battery power), although it may remain registered as present in the network. For example, in the case of a mobile network the terminal may move around and be connected to various base stations during the idle mode, known as "camping", although without communicating any data. When the terminal is not active, no key is naturally needed for protection and thus no key management operations take place.

In Fig. 3C, the terminal 300 is thus connected to a service point 308 called "x", when entering an active mode by starting a communication session, which is represented by a **step 3:12.** Since the terminal has already been registered with the service control node 304 earlier in step 3:1 above, the basic key Ik is still valid for the terminal. In order to obtain a useful key for protection of any communication with terminal 300, the service point 308 now sends a key request for the terminal 300 to service control node 304, in a next **step 3:13**, including a terminal identity. This key request is typically part of a more general "context request" for the terminal in question, according to conventional procedures.

In response thereto, service control node 304 retrieves the basic key Ik and again creates an initial modified key Ik'ₓ in a **step 3:14** by applying the first predetermined function f to at least the basic key Ik and the updated key version parameter v' such that Ik'ₓ = f(Ik, v'). Thereby, the new initial modified key Ik'ₓ will be different from the one calculated in step 3:2 above. Again, a service point identity "SPx" may optionally also be input to function f to make the key Ik'ₓ unique for this terminal/service point combination, as well as any other parameters.

It should be noted that even if terminal 300 is reactivated with the same service point 302 as in Fig. 3A, resulting in a key Ik'₁, it would still be different from the previous initial modified key Ik₁ due to the new value of the key version parameter v'. In a next **step 3:15**, service control node 304 sends the new initial modified key Ik'ₓ to service point 308 in response to the key request of step 3:13.

At the same time, i.e. independently of steps 3:13 - 3:15, terminal 300 performs the same calculation of key Ik'ₓ based on the updated value v', as indicated in **step 3:16.** Finally, key Ik'ₓ can now be used by terminal 300 and service point 308 to protect the communication during the session, as long as terminal 300 stays connected to service point 308, which is illustrated by a **step 3:17.**

Hence, a new chain of keys has been started based on the updated key version parameter v', in this example v'=1, which will be altogether different from the previous chain. The new chain will be continued in the manner described above for Fig. 3B upon switching service points, as long as the terminal stays active, i.e. is engaged in a session. When the terminal switches from one service point to another, the old one and the terminal can delete their copy of the key. Thus, only one key is managed at a time.

If the terminal stays active for a relatively long period, potentially resulting in decreased security as a new key is frequently calculated based on the previous one, the security can be restored if a new key chain based on an updated key version parameter is triggered, even if the terminal has not been reactivated from idle state. For example, a new initial modified key can be obtained if a current service point sends a key request to the service control node 304 as in step 3:13, which may be triggered after a preset active time period, or after having communicated a predetermined amount of data, or after a predetermined number of service point switches, or according to any other specified criteria. The triggering may be initiated by the current service point or alternatively by the terminal. The key version parameter will be reset to its initial value after the terminal has been deregistered with the network (e.g. when powered off) and is registered afresh, or when a re-authentication takes place. Another basic key Ik may then be established for the terminal.

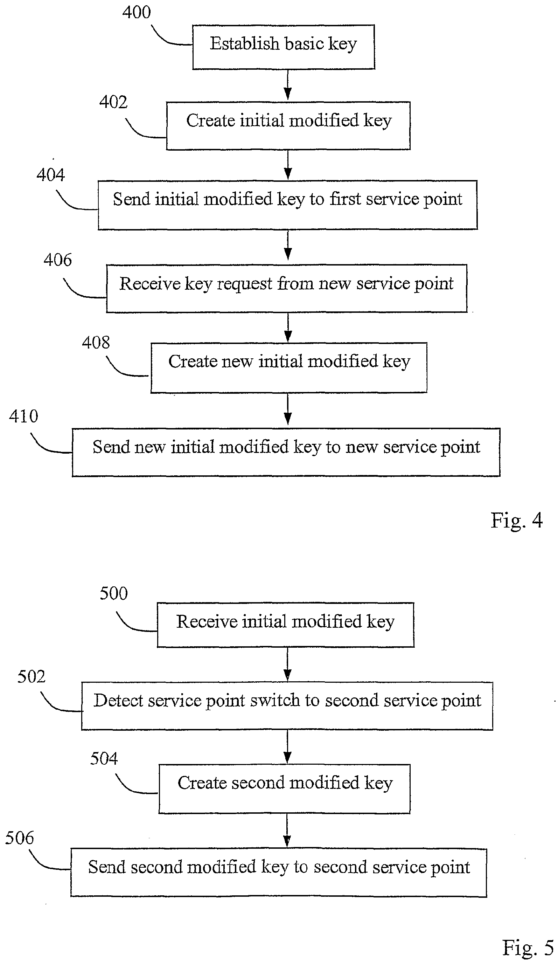

A basic procedure of providing keys for a terminal will now be described with reference to the flow chart illustrated in Fig. 4, as executed in a service control node in a communication network comprising a plurality of service points. Said keys can be used for protecting communication between the terminal and the service points. The keys and parameters occurring in the previous example of Fig's 3A-C, are also used here.

In a first **step 400**, a basic key Ik is established for the terminal during a registration procedure when the terminal has entered the network.

In a next **step 402**, an initial modified key Ik₁ is created by applying a predetermined function f to at least the basic key and an initial value of a key version parameter v, when the terminal starts a first communication session.

In a next **step 404**, the initial modified key is sent to a first service point to which the terminal is initially attached, such that it can be used to protect communication between the terminal and the first service point.

In a next **step 406**, a key request is received from a new service point (x) to which the terminal is attached, e.g. when the terminal enters an active state after a period in idle state.

In a next **step 408**, a new initial modified key Ik'ₓ is created by applying said function f to at least the basic key Ik and an updated value of said key version parameter v', when the terminal starts a second communication session.

In a final **step 410**, the new initial modified key is sent to the new service point, such that it can be used to protect communication between the terminal and the new service point.

A basic procedure of obtaining keys for a terminal will now be described with reference to the flow chart illustrated in Fig. 5, as executed in a first service point in a communication network. The terminal is initially attached to the first service point. The keys and parameters occurring in the previous example of Fig's 3A-C, are also used here.

In a first **step 500**, an initial modified key Sk₁ is received from a service control node, that has been created by applying a predetermined first function f to at least a basic key Ik established for the terminal and an initial value of a key version parameter v.

In a next **step 502**, it is detected that the terminal will switch to a second service point during an ongoing session.

In a next **step 504**, a second modified key Ik₂ is created by applying a predetermined second function g to at least the initial modified key Ik₁.

In a final **step 506**, the second modified key Ik₂ is sent to the second service point, such that it can be used to protect communication between the terminal and the second service point.

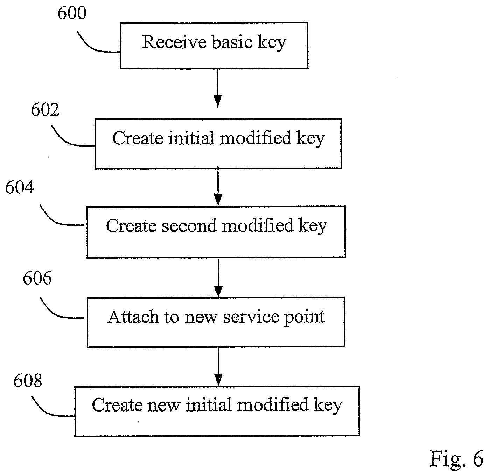

A basic procedure of obtaining keys for protecting communication between a terminal and service points in a communication network, will now be described with reference to the flow chart illustrated in Fig. 6, as executed in the terminal. The terminal is initially attached to a first service point in the network. The keys and parameters occurring in the previous example of Fig's 3A-C, are also used here.

In a first **step 600**, a basic key Ik is determined during a registration procedure when entering the network.

In a next **step 602**, an initial modified key Ik₁ is created by applying a predetermined first function f to at least the basic key Ik and an initial value of a key version parameter v, when starting a first communication session, such that it can be used to protect communication with the first service point.

In a next **step 604**, a second modified key Ik₂ is created by applying a predetermined second function g to at least the initial modified key Ik₁, if the terminal switches to a second service point.

In a next **step 606**, the terminal attaches to a new service point x after an idle period in order to start a second communication session.

In a final **step 608**, a new initial modified key Ik'ₓ is created by applying the first function f to at least the basic key Ik and an updated value of said key version parameter v', such that it can be used to protect communication with the new service point.

The service control node, service point and terminal described above in connection with fig's 4-6 may be provided with suitable means for executing the described steps in the flow charts shown in Fig. 4, Fig. 5 and Fig. 6, respectively.

By using the present solution, e.g. according to any of the described embodiments, a simple yet secure mechanism is obtained for handling keys for protecting communication between terminals and service points in a communication network. New keys are safely established whenever the terminal switches the service point, and no hand-over predictions are required. The number of keys that must be handled by base stations or other service points is also kept at a minimum. Reliable backward security when switching service points, and forward security when a terminal starts a session, can also be obtained with a minimum of service impact.

Although the embodiments described above have been mainly directed to the case of a mobile network, the present invention can be implemented in various different types of communication networks. For example, the invention can also be implemented in WiMAX/802.16, WLAN/802.11 and Flarion/802.20 (or 802.21).

While the invention has been described with reference to specific exemplary embodiments, the description is only intended to illustrate the inventive concept and should not be taken as limiting the scope of the invention. Various alternatives, modifications and equivalents may be used without departing from the invention, which is defined by the appended claims.

## Claims

1. A method, as executed in a service control node in a communication network comprising a plurality of service points, of providing keys for protecting communication between a terminal and said service points, the method being **characterised by**:
- A) establishing (600;3:1) a basic key (Ik) for the terminal, during a registration procedure when the terminal has entered the network, and initializing a key version parameter (v) to an initial value in the same way as it is initialized by the terminal;
- B) creating (602;3:2) an initial modified key (Ik₁) by applying a predetermined function (f) to at least the basic key and the initial value of the key version parameter (v), when the terminal starts a first communication session, said initial modified key (Ik₁) thereby being created in the same way as it is created by the terminal;
- C) sending (3:3) the initial modified key to a service point of said service points to which the terminal is initially attached, the modified key being usable to protect communication between the terminal and the service point, and
- D) updating (3:14) said value of said key version parameter (v), by changing it according to a predetermined scheme or algorithm said updated value of said key version parameter (v') thereby being updated in the same way as it is updated by the terminal,
wherein the value of the key version parameter (v') is changed in the same way as it is changed by the terminal each time a new initial modified key is created,

2. A method according to claim 1, comprising the following further steps:
- **D)** receiving (3:13) a key request from a new service point (x) to which the terminal is attached,
- **E)** creating (3:14) a new initial modified key (Ik'ₓ) by applying said function to at least the basic key and an updated value of said key version parameter (v'), when the terminal starts a second communication session, and
- **F)** sending (3:15) the new initial modified key to the new service point, such that it can be used to protect communication between the terminal and the new service point.

3. A method, as executed in a terminal initially attached to a first service point in a communication network, of obtaining keys for protecting communication with service points in the network, the method being **characterized by**:
- **A)** determining (400;3:1) a basic key (Ik) during a registration procedure when entering the network, and initializing a key version parameter (v) to an initial value in the same way as it is initialized by the service control node;
- **B)** creating (402;3:4) an initial modified key (Ik₁) by applying a predetermined first function (f) to at least the basic key and the initial value of the key version parameter (v),
when starting a first communication session, such that it can be used to protect communication with the first service point, said initial modified key (Ik₁) thereby being created in the same way as it is created by the service control node;
- **C)** updating (408;3:16) said value of said key version parameter (v), by changing it according to a
predetermined scheme or algorithm said updated value of said key version parameter (v') thereby being updated in the same way as it is updated by the service control node,
wherein the value of the key version parameter (v') is changed in the same way as it is changed by the service control node each time a new initial modified key is created,

4. A method according to claim 3, comprising the following further steps:
- **D)** attaching to a new service point (x) after an idle period in order to start a second communication session, and
- **E)** creating a new initial modified key (Ik'ₓ) by applying said first function to at least the basic key and an updated value of said key version parameter (v'), such that it can be used to protect communication with the new service point.

5. A method according to any of claims 1-4, wherein the key version parameter is initialised to zero and then incremented by one each time a new initial modified key is created.

6. A method according to claim 2, wherein the key request is sent when the terminal is reactivated after being idle.

7. A method according to claim 2, wherein the key request is sent after the terminal has been active a preset time period, or has communicated a predetermined amount of data, or has made a predetermined number of service point switches.

8. An arrangement in a service control node in a communication network comprising a plurality of service points, for providing keys for protecting communication between a terminal and said service points, the arrangement being configured to:
- establisha basic key (Ik) for the terminal during a registration procedure when the terminal has entered the network, and initialize a key version parameter (v) to an initial value in the same way as it is initialized by the terminal;
- create an initial modified key (Ik₁) by applying a predetermined function (f) to at least the basic key and the initial value of the key version parameter (v), when the terminal
starts a first communication session, said initial modified key (Ik₁) thereby being created in the same way as it is created by the terminal,
- send the initial modified key to a first service point of said service points to which the terminal is initially attached, such that it can be used to protect communication between the terminal and the first service point, and
update said value of said key version parameter (v), by changing it according to a predetermined
scheme or algorithm said updated value of said key version parameter (v') thereby being updated in the same way as it is updated by the terminal,
wherein the arrangement is further configured to change the value of the key version parameter (v') in the same way as it is changed by the terminal each time a new initial modified key is created,

9. An arrangement according to claim 8, the arrangement being further configured to:
- receive a key request from a new service point (x) to which the terminal is attached,
- create a new initial modified key (Ik'ₓ) by applying said function to at least the basic key and an updated value of said key version parameter (v'), when the terminal starts a second communication session, and
- send the new initial modified key to the new service point, such that it can be used to protect communication between the terminal and the new service point.

10. An arrangement in a terminal initially attached to a first service point in a communication network, for obtaining keys for protecting communication with service points in the network, the arrangement being configured to:
- determine a basic key (Ik) during a registration procedure when entering the network, and initialize a key version parameter (v) to an initial value in the same way as it is initialized by the service control node;
- create an initial modified key (Ik₁) by applying a predetermined first function (f) to at least the basic key and the initial value of the key version parameter (v), when starting a
first communication session, such that it can be used to protect communication with the first service point, said initial modified key (Ik₁) thereby being created in the same way as it is created by the service control node;
- update said value of said key version parameter (v), by changing it according to a predetermined
scheme or algorithm said updated value of said key version parameter (v') thereby being updated in the same way as it is updated by the service control node,
the terminal being further configures to change the value of the key version parameter (v') in the same way as it is changed by the service control node each time a new initial modified key is created.

11. An arrangement according to claim 10, wherein said arrangement is further configured to:
- attach to a new service point (x) after an idle period in order to start a second communication session, and
- create a new initial modified key (Ik'ₓ) by applying said first function to at least the basic key and an updated value of said key version parameter (v'), such that it can be used to protect communication with the new service point.

12. An arrangement according to any of claims 8-11, wherein said arrangement is further configured to_create an initial modified key and/or to input a service point identity ("SP1","SPx") to the predetermined function when creating the initial modified key and/or new initial modified key, to make the key unique for the particular terminal/service point combination.

## Patentansprüche

1. Verfahren, das in einem Dienststeuerungsknoten in einem Kommunikationsnetz ausgeführt wird, das eine Mehrzahl von Dienstpunkten umfasst, zur Bereitstellung von Schlüsseln zum Schützen von Kommunikation zwischen einem Endgerät und den Dienstpunkten, wobei das Verfahren **gekennzeichnet ist durch**:
- A) Erstellen (600; 3:1) eines Basisschlüssels (lk) für das Endgerät während einer Registrierungsprozedur, wenn das Endgerät in das Netz eingetreten ist, und Initialisieren eines Schlüsselversionsparameters (v) auf einen Initialwert auf die gleiche Weise, wie er **durch** das Endgerät initialisiert wird;
- B) Erstellen (602; 3:2) eines modifizierten Initialschlüssels (Ik₁) **durch** Anwenden einer vorbestimmten Funktion (f) auf mindestens den Basisschlüssel und den Initialwert des Schlüsselversionsparameters (v), wenn das Endgerät eine erste Kommunikationssitzung startet, wodurch der modifizierte Initialschlüssel (Ik₁) auf die gleiche Weise erstellt wird, wie er **durch** das Endgerät erstellt wird;
- C) Senden (3:3) des modifizierten Initialschlüssels an einen Dienstpunkt der Dienstpunkte, an den das Endgerät anfänglich angeschlossen ist, wobei der modifizierte Schlüssel verwendet werden kann, um Kommunikation zwischen dem Endgerät und dem Dienstpunkt zu schützen, und
- D) Aktualisieren (3:14) des Wertes des Schlüsselversionsparameters (v) **durch** Ändern desselben gemäß einem vorbestimmten Schema oder Algorithmus, wodurch der aktualisierte Wert des Schlüsselversionsparameters (v') auf die gleiche Weise aktualisiert wird, wie er **durch** das Endgerät aktualisiert wird,
wobei der Wert des Schlüsselversionsparameters (v") jedes Mal, wenn ein neuer modifizierter Initialschlüssel erstellt wird, auf die gleiche Weise geändert wird, wie er **durch** das Endgerät geändert wird.

2. Verfahren nach Anspruch 1, umfassend die folgenden weiteren Schritte:
- D) Empfangen (3:13) einer Schlüsselanforderung von einem neuen Dienstpunkt (x), an den das Endgerät angeschlossen wird,
- E) Erstellen (3:14) eines neuen modifizierten Initialschlüssels (lk'ₓ) durch Anwenden der Funktion auf mindestens den Basisschlüssel und einen aktualisierten Wert des Schlüsselversionsparameters (v'), wenn das Endgerät eine zweite Kommunikationssitzung startet, und
- F) Senden (3:15) des neuen modifizierten Initialschlüssels an den neuen Dienstpunkt, derart dass er verwendet werden kann, um Kommunikation zwischen dem Endgerät und dem neuen Dienstpunkt zu schützen.

3. Verfahren, das in einem Endgerät ausgeführt wird, das anfänglich an einen ersten Dienstpunkt in einem Kommunikationsnetz angeschlossen ist, zum Einholen von Schlüsseln zum Schützen von Kommunikation mit Dienstpunkten im Netz, wobei das Verfahren **gekennzeichnet ist durch**:
- A) Bestimmen (400; 3:1) eines Basisschlüssels (lk) während einer Registrierungsprozedur bei Eintritt in das Netz und Initialisieren eines Schlüsselversionsparameters (v) auf einen Initialwert auf die gleiche Weise, wie er **durch** den Dienststeuerungsknoten initialisiert wird;
- B) Erstellen (402; 3:4) eines modifizierten Initialschlüssels (lk₁) **durch** Anwenden einer vorbestimmten ersten Funktion (f) auf mindestens den Basisschlüssel und den Initialwert des Schlüsselversionsparameters (v) bei Start einer ersten Kommunikationssitzung, derart dass er verwendet werden kann, um Kommunikation mit dem ersten Dienstpunkt zu schützen, wodurch der modifizierte Initialschlüssel (lk₁) auf die gleiche Weise erstellt wird, wie er **durch** den Dienststeuerungsknoten erstellt wird;
- C) Aktualisieren (408; 03:16) des Wertes des Schlüsselversionsparameters (v) **durch** Ändern desselben gemäß einem vorbestimmten Schema oder Algorithmus, wodurch der aktualisierte Wert des Schlüsselversionsparameters (v') auf die gleiche Weise aktualisiert wird, wie er **durch** den Dienststeuerungsknoten aktualisiert wird,
wobei der Wert des Schlüsselversionsparameters (v') jedes Mal, wenn ein neuer modifizierter Initialschlüssel erstellt wird, auf die gleiche Weise geändert wird, wie er **durch** Dienststeuerungsknoten geändert wird.

4. Verfahren nach Anspruch 3, umfassend die folgenden weiteren Schritte:
- D) Anschließen an einen neuen Dienstpunkt (x) nach einer Ruheperiode, um eine zweite Kommunikationssitzung zu starten, und
- E) Erstellen eines neuen modifizierten Initialschlüssels (lk'ₓ) durch Anwenden der ersten Funktion auf mindestens den Basisschlüssel und einen aktualisierten Wert des Schlüsselversionsparameters (v'), derart dass er verwendet werden kann, um Kommunikation mit dem neuen Dienstpunkt zu schützen.

5. Verfahren nach einem der Ansprüche 1 bis 4, wobei der Schlüsselversionsparameter auf Null initialisiert wird und dann jedes Mal, wenn ein neuer modifizierter Initialschlüssel erstellt wird, um eins inkrementiert wird.

6. Verfahren nach Anspruch 2, wobei die Schlüsselanforderung gesendet wird, wenn das Endgerät nach einem Ruhezustand reaktiviert wird.

7. Verfahren nach Anspruch 2, wobei die Schlüsselanforderung gesendet wird, nachdem das Endgerät eine voreingestellte Zeitdauer aktiv war oder eine vorbestimmte Menge von Daten kommuniziert hat oder eine vorbestimmte Anzahl von Dienstpunktwechseln durchgeführt hat.

8. Anordnung in einem Dienststeuerungsknoten in einem Kommunikationsnetz, das eine Mehrzahl von Dienstpunkten umfasst, zum Bereitstellen von Schlüsseln zum Schützen von Kommunikation zwischen einem Endgerät und den Dienstpunkten, wobei die Anordnung konfiguriert ist zum:
- Erstellen eines Basisschlüssels (lk) für das Endgerät während einer Registrierungsprozedur, wenn das Endgerät in das Netz eingetreten ist, und Initialisieren eines Schlüsselversionsparameters (v) auf einen Initialwert auf die gleiche Weise, wie er durch das Endgerät initialisiert wird;
- Erstellen eines modifizierten Initialschlüssels (lk₁) durch Anwenden einer vorbestimmten Funktion (f) auf mindestens den Basisschlüssel und den Initialwert des Schlüsselversionsparameters (v), wenn das Endgerät eine erste Kommunikationssitzung startet, wodurch der modifizierte Initialschlüssel (lk₁) auf die gleiche Weise erstellt wird, wie er durch das Endgerät erstellt wird;
- Senden des modifizierten Initialschlüssels an einen Dienstpunkt der Dienstpunkte, an den das Endgerät anfänglich angeschlossen ist, derart dass er verwendet werden kann, um Kommunikation zwischen dem Endgerät und dem Dienstpunkt zu schützen, und
- Aktualisieren des Wertes des Schlüsselversionsparameters (v) durch Ändern desselben gemäß einem vorbestimmten Schema oder Algorithmus, wodurch der aktualisierte Wert des Schlüsselversionsparameters (v') auf die gleiche Weise aktualisiert wird, wie er durch das Endgerät aktualisiert wird,
wobei die Anordnung ferner so konfiguriert ist, dass sie den Wert des Schlüsselversionsparameters (v') jedes Mal, wenn ein neuer modifizierter Initialschlüssel erstellt wird, auf die gleiche Weise ändert, wie er durch das Endgerät geändert wird.

9. Anordnung nach Anspruch 8, wobei die Anordnung ferner konfiguriert ist zum:
- Empfangen einer Schlüsselanforderung von einem neuen Dienstpunkt (x), an den das Endgerät angeschlossen wird,
- Erstellen eines neuen modifizierten Initialschlüssels (lk'ₓ) durch Anwenden der Funktion auf mindestens den Basisschlüssel und einen aktualisierten Wert des Schlüsselversionsparameters (v'), wenn das Endgerät eine zweite Kommunikationssitzung startet, und
- Senden des neuen modifizierten Initialschlüssels an den neuen Dienstpunkt, derart dass er verwendet werden kann, um Kommunikation zwischen dem Endgerät und dem neuen Dienstpunkt zu schützen.

10. Anordnung in einem Endgerät, das anfänglich an einen ersten Dienstpunkt in einem Kommunikationsnetz angeschlossen ist, zum Einholen von Schlüsseln zum Schützen von Kommunikation mit Dienstpunkten im Netz, wobei die Anordnung konfiguriert ist zum:
- Bestimmen eines Basisschlüssels (lk) während einer Registrierungsprozedur bei Eintritt in das Netz und Initialisieren eines Schlüsselversionsparameters (v) auf einen Initialwert auf die gleiche Weise, wie er durch den Dienststeuerungsknoten initialisiert wird;
- Erstellen eines modifizierten Initialschlüssels (lk₁) durch Anwenden einer vorbestimmten ersten Funktion (f) auf mindestens den Basisschlüssel und den Initialwert des Schlüsselversionsparameters (v) bei Start einer ersten Kommunikationssitzung, derart dass er verwendet werden kann, um Kommunikation mit dem ersten Dienstpunkt zu schützen, wodurch der modifizierte Initialschlüssel (lk₁) auf die gleiche Weise erstellt wird, wie er durch den Dienststeuerungsknoten erstellt wird;
- Aktualisieren des Wertes des Schlüsselversionsparameters (v) durch Ändern desselben gemäß einem vorbestimmten Schema oder Algorithmus, wodurch der aktualisierte Wert des Schlüsselversionsparameters (v') auf die gleiche Weise aktualisiert wird, wie er durch den Dienststeuerungsknoten aktualisiert wird,
wobei das Endgerät ferner so konfiguriert ist, dass es den Wert des Schlüsselversionsparameters (v') jedes Mal, wenn ein neuer modifizierter Initialschlüssel erstellt wird, auf die gleiche Weise ändert, wie er durch den Dienststeuerungsknoten geändert wird.

11. Anordnung nach Anspruch 10, wobei die Anordnung ferner konfiguriert ist zum:
- Anschließen an einen neuen Dienstpunkt (x) nach einer Ruheperiode, um eine zweite Kommunikationssitzung zu starten, und
- Erstellen eines neuen modifizierten Initialschlüssels (lk'ₓ) durch Anwenden der ersten Funktion auf mindestens den Basisschlüssel und einen aktualisierten Wert des Schlüsselversionsparameters (v'), derart dass er verwendet werden kann, um Kommunikation mit dem neuen Dienstpunkt zu schützen.

12. Anordnung nach einem der Ansprüche 8 bis 11, wobei die Anordnung ferner so konfiguriert ist, dass sie einen modifizierten Initialschlüssel erstellt und/oder eine Dienstpunktkennung ("SP1", "SPx") in die vorbestimmte Funktion eingibt, wenn sie den modifizierten Initialschlüssel und/oder den neuen modifizierten Initialschlüssel erstellt, um den Schlüssel für die jeweilige Endgerät/Dienstpunkt-Kombination eindeutig zu machen.

## Revendications

1. Procédé, exécuté dans un noeud de commande de service dans un réseau de communication comprenant une pluralité de points de service, de fourniture de clés pour protéger une communication entre un terminal et lesdits points de service, le procédé étant **caractérisé par** :
- A) l'établissement (600 ; 3:1) d'une clé de base (lk) pour le terminal, au cours d'une procédure d'enregistrement lorsque le terminal est entré dans le réseau, et l'initialisation d'un paramètre de version de clé (v) à une valeur initiale de la même manière qu'il est initialisé par le terminal ;
- B) la création (602, 3:2) d'une clé modifiée initiale (lk₁) par l'application d'une fonction prédéterminée (f) à au moins la clé de base et la valeur initiale du paramètre de version de clé (v), lorsque le terminal commence une première session de communication, ladite clé modifiée initiale (lk₁) étant de ce fait créée de la même manière qu'elle est créée par le terminal ;
- C) l'envoi (3:3) de la clé modifiée initiale à un point de service parmi lesdits points de service auquel le terminal est initialement attaché, ladite clé modifiée étant utilisable pour protéger une communication entre le terminal et le point de service, et
- D) la mise à jour (3:14) de ladite valeur dudit paramètre de version de clé (v) en la changeant en fonction d'un schéma ou d'un algorithme prédéterminé, ladite valeur mise à jour dudit paramètre de version de clé (v') étant de ce fait mise à jour de la même manière qu'elle est mise à jour par le terminal,
dans lequel la valeur du paramètre de version de clé (v') est changée de la même manière qu'elle est changée par le terminal chaque fois qu'une nouvelle clé modifiée initiale est créée.

2. Procédé selon la revendication 1, comprenant en outre les étapes suivantes :
- D) la réception (3:13) d'une demande de clé en provenance d'un nouveau point de service (x) auquel le terminal est attaché,
- E) la création (3:14) d'une nouvelle clé modifiée initiale (lk'ₓ) par l'application de ladite fonction à au moins la clé de base et une valeur mise à jour dudit paramètre de version de clé (v'), lorsque le terminal commence une deuxième session de communication, et
- F) l'envoi (3:15) de la nouvelle clé modifiée initiale au nouveau point de service, de sorte qu'elle puisse être utilisée pour protéger une communication entre le terminal et le nouveau point de service.

3. Procédé, exécuté dans un terminal initialement attaché à un premier point de service dans un réseau de communication, d'obtention de clés pour protéger une communication entre des points de service dans le réseau, le procédé étant **caractérisé par** :
- A) la détermination (400 ; 3:1) d'une clé de base (lk) au cours d'une procédure d'enregistrement lors de l'entrée dans le réseau, et l'initialisation d'un paramètre de version de clé (v) à une valeur initiale de la même manière qu'il est initialisé par le noeud de commande de service ;
- B) la création (402, 3:4) d'une clé modifiée initiale (lk₁) par l'application d'une première fonction prédéterminée (f) à au moins la clé de base et la valeur initiale du paramètre de version de clé (v), lors du démarrage d'une première session de communication, de sorte qu'elle puisse être utilisée pour protéger une communication avec le premier point de service, ladite clé modifiée initiale (lk₁) étant de ce fait créée de la même manière qu'elle est créée par le noeud de commande de service ;
- C) la mise à jour (408 ; 3:16) de ladite valeur dudit paramètre de version de clé (v) en la changeant en fonction d'un schéma ou d'un algorithme prédéterminé, ladite valeur mise à jour dudit paramètre de version de clé (v') étant de ce fait mise à jour de la même manière qu'elle est mise à jour par le noeud de commande de service,
dans lequel la valeur du paramètre de version de clé (v') est changée de la même manière qu'elle est changée par le noeud de commande de service chaque fois qu'une nouvelle clé modifiée initiale est créée.

4. Procédé selon la revendication 3, comprenant en outre les étapes suivantes :
- D) l'attachement à un nouveau point de service (x) après une période de veille afin de démarrer une deuxième session de communication, et
- E) la création d'une nouvelle clé modifiée initiale (lk'ₓ) par l'application de ladite première fonction à au moins la clé de base et une valeur mise à jour dudit paramètre de version de clé (v'), de sorte qu'elle puisse être utilisée pour protéger une communication avec le nouveau point de service.

5. Procédé selon l'une quelconque des revendications 1 à 4, dans lequel le paramètre de version de clé est initialisé à zéro puis incrémenté d'un chaque fois qu'une nouvelle clé modifiée initiale est créée.

6. Procédé selon la revendication 2, dans lequel la demande de clé est envoyée lorsque le terminal est réactivé après avoir été en veille.

7. Procédé selon la revendication 2, dans lequel la demande de clé est envoyée après que le terminal a été actif pendant une période de temps préréglée ou a communiqué une quantité prédéterminée de données ou a effectué un nombre prédéterminé de commutations de points de service.

8. Agencement dans un noeud de commande de service dans un réseau de communication comprenant une pluralité de points de service, pour la fourniture de clés pour protéger une communication entre un terminal et lesdits points de service, l'agencement étant configuré pour effectuer :
- l'établissement d'une clé de base (lk) pour le terminal, au cours d'une procédure d'enregistrement lorsque le terminal est entré dans le réseau, et l'initialisation d'un paramètre de version de clé (v) à une valeur initiale de la même manière qu' il est initialisé par le terminal ;
- la création d'une clé modifiée initiale (lk₁) par l'application d'une fonction prédéterminée (f) à au moins la clé de base et la valeur initiale du paramètre de version de clé (v), lorsque le terminal commence une première session de communication, ladite clé modifiée initiale (lk₁) étant de ce fait créée de la même manière qu'elle est créée par le terminal ;
- l'envoi de la clé modifiée initiale à un premier point de service parmi lesdits points de service auquel le terminal est initialement attaché, de sorte qu'elle puisse être utilisée pour protéger une communication entre le terminal et le premier point de service, et
- la mise à jour de ladite valeur dudit paramètre de version de clé (v) en la changeant en fonction d'un schéma ou d'un algorithme prédéterminé, ladite valeur mise à jour dudit paramètre de version de clé (v') étant de ce fait mise à jour de la même manière qu'elle est mise à jour par le terminal,
dans lequel l'agencement est en outre configuré pour effectuer le changement de la valeur du paramètre de version de clé (v') de la même manière qu'elle est changée par le terminal chaque fois qu'une nouvelle clé modifiée initiale est créée.

9. Agencement selon la revendication 8, l'agencement étant en outre configuré pour effectuer :
- la réception d'une demande de clé en provenance d'un nouveau point de service (x) auquel le terminal est attaché,
- la création d'une nouvelle clé modifiée initiale (lk'ₓ) par l'application de ladite fonction à au moins la clé de base et une valeur mise à jour dudit paramètre de version de clé (v'), lorsque le terminal commence une deuxième session de communication, et
- l'envoi de la nouvelle clé modifiée initiale au nouveau point de service, de sorte qu'elle puisse être utilisée pour protéger une communication entre le terminal et le nouveau point de service.

10. Agencement dans un terminal initialement attaché à un premier point de service dans un réseau de communication, pour l'obtention de clés pour protéger une communication avec des points de service dans le réseau, l'agencement étant configuré pour effectuer :
- la détermination d'une clé de base (lk) au cours d'une procédure d'enregistrement lors de l'entrée dans le réseau, et l'initialisation d'un paramètre de version de clé (v) à une valeur initiale de la même manière qu'il est initialisé par le noeud de commande de service ;
- la création d'une clé modifiée initiale (lk₁) par l'application d'une première fonction prédéterminée (f) à au moins la clé de base et la valeur initiale du paramètre de version de clé (v), lors du démarrage d'une première session de communication, de sorte qu'elle puisse être utilisée pour protéger une communication avec le premier point de service, ladite clé modifiée initiale (lk₁) étant de ce fait créée de la même manière qu'elle est créée par le noeud de commande de service ;
- la mise à jour de ladite valeur dudit paramètre de version de clé (v) en la changeant en fonction d'un schéma ou d'un algorithme prédéterminé, ladite valeur mise à jour dudit paramètre de version de clé (v') étant de ce fait mise à jour de la même manière qu'elle est mise à jour par le noeud de commande de service,
le terminal étant en outre configuré pour changer la valeur du paramètre de version de clé (v') de la même manière qu'elle est changée par le noeud de commande de service chaque fois qu'une nouvelle clé modifiée initiale est créée.

11. Agencement selon la revendication 10, dans lequel ledit agencement est en outre configuré pour effectuer :
- l'attachement à un nouveau point de service (x) après une période de veille afin de démarrer une deuxième session de communication, et
- la création d'une nouvelle clé modifiée initiale (lk'ₓ) par l'application de ladite première fonction à au moins la clé de base et une valeur mise à jour dudit paramètre de version de clé (v'), de sorte qu'elle puisse être utilisée pour protéger une communication avec le nouveau point de service.

12. Agencement selon l'une quelconque des revendications 8 à 11, dans lequel ledit agencement est en outre configuré pour créer une clé modifiée initiale et/ou entrer une identité de point de service (« SP1 » ; « SPx ») dans la fonction prédéterminée lors de la création de la clé modifiée initiale et/ou de la nouvelle clé modifiée initiale, pour rendre la clé unique pour la combinaison particulière de terminal et de point de service.
